# EUROPEAN PATENT SPECIFICATION

(11) **EP 3 124 862 B1**
(45) Date of publication and mention of the grant of the patent: **02.01.2019**
(21) Application number: 16180608.8
(22) Date of filing: 21.07.2016
(51) Int. Cl.: F23C 10/04, F23C 10/18, F23G 5/30, F23G 5/46, F23M 5/08, F22B 37/10, F16L 57/04, F28F 19/00, F23M 5/04

(54) **HEAT TRANSFER TUBE FOR FLUIDIZED-BED BOILER**
WÄRMEÜBERTRAGUNGSROHR FÜR WIRBELBETTKESSEL
TUBE DE TRANSFERT DE CHALEUR POUR CHAUDIÈRE À LIT FLUIDISÉ

(30) Priority: 28.07.2015 JP 2015148621; 15.06.2016 JP 2016119335
(43) Date of publication of application: 01.02.2017
(73) Proprietor: Ebara Environmental Plant Co., Ltd., Tokyo 144-0042 (JP)
(72) Inventor: KAJIWARA, Hirokazu, Tokyo, 1440042 (JP); ISHIKAWA, Eiji, Tokyo, 1440042 (JP); HONDA, Yasuhisa, Tokyo, 1440042 (JP); NOGUCHI, Manabu, Tokyo, 1440042 (JP)
(74) Representative: Carstens, Dirk Wilhelm

(56) References cited:
- EP-A1- 2 821 697
- GB-A- 278 811
- JP-A- 2000 205 503
- US-A- 5 881 802
- US-B1- 7 066 242

## Description

### BACKGROUND OF THE INVENTION

### Field of the Invention:

The present invention relates to heat transfer tubes used in a fluidized bed of a fluidized-bed boiler for recovering combustion heat generated when a fuel such as wastes, RDF (refuse derived fuel) or biomass is combusted.

### Description of the Related Art:

In recent years, there have been growing demands for utilization of energy resources from the standpoint of dealing with the problems of higher prices of fossil fuels, global warming, and the like. Thus, the importance of power generation systems for combusting a fuel such as wastes, RDF or biomass as one of thermal recycle is increasing. Among such power generation systems, there is a power generation system which recovers thermal energy, generated when a fuel such as wastes, RDF or biomass is combusted using a fluidized-bed boiler, by heat transfer tubes. In this power generation system, when the fuel such as wastes, RDF or biomass is combusted in the fluidized-bed boiler, a severe corrosive environment may be developed by chlorides originating from the fuel. In such severe corrosive environment, an abrasion action by a fluidized medium is added to cause significant thickness reduction of a protector for the heat transfer tube, thus shortening the lifetime of the protector itself and requiring frequent maintenance.

As measures to prolong the lifetime of a protector, there have been known a method for improving wear resistance by forming a surface-hardened layer, and a method for reducing a collision speed of particles by providing studs on a surface of a protector as disclosed in JP 2004-19965 A.

Further, in JP 5-18504 A, a gap is provided between a protector and a heat transfer tube to increase a surface temperature of the protector, thereby forming an oxide film on a surface and consequently improving wear resistance. It is also reported in JP 8-226601 A that in the case of using a stainless material such as SUS for the protector, an oxide film is formed due to an increase in temperature, thus improving wear resistance and consequently decreasing thickness reduction of the protector.

On the other hand, in JP 5-25101 U, there has been proposed a method for suppressing corrosion of a protector by providing a sprayed aluminum layer between the protector and a heat transfer tube, so that aluminum is melted to enhance the degree of adhesion and to lower a surface temperature of the protector.

Further, one of the measures to secure the lifetime is to provide a protector with sufficient thickness reduction allowance. Casting is commonly used because a plate material or a pipe material has a limited thickness and processing of a thick plate requires significant cost.

GB 2 78 811 A discloses improvements in or relating to water tube boilers. Said document discloses the preamble of claim 1.

### SUMMARY OF THE INVENTION

As described above, in the case of forming a surface-hardened layer as a measure for prolonging the lifetime of the protector, special processing is required to increase the cost of the protector. The surface-hardened layer is effective against simple erosion, but has a limited effect in the environment where corrosion is involved. The relaxation of wear conditions by the surface studs or the like is effective against the phenomena of both abrasion and corrosive wear. However, the structure becomes complex to increase the cost of the protector and to require complex maintenance.

With regard to thickening as the measure for prolonging the lifetime, although the casting is easily thickened and is low in cost, some materials are difficult to weld. Further, in some cases, on-site welding work itself is difficult, and thus it is desirable to reduce the on-site welding work in terms of maintenance. For example, in the case where the entire surface of the heat transfer tube is protected by the protector, the number of locations to be welded is increased to make workload high, resulting in poor installation and replacement workability. Particularly, in the case where the entire circumference of the heat transfer tube needs to be protected, since the number of protectors is increased, complex protectors cause not only an increase in cost but also a decrease in work efficiency. Further, thick protectors lower work efficiency also due to heavy weight. Furthermore, if the thick protectors are combined to make up a fitting structure, the fluidized medium enters a gap between the protector and the heat transfer tube during operation, and an excessive stress is generated at the time of cooling to cause a risk that the protector may be cracked.

In the light of wear resistance, increasing the temperature of the protector is considered to be effective. However, if a gap is formed between the protector and the heat transfer tube, the fluidized medium enters the expanded gap during operation, and an excessive stress is generated by contraction at the time of shutdown to cause a risk that the protector may be cracked or deformed. On the other hand, in the light of corrosion resistance, lowering the surface temperature of the protector has been proposed. Thus, there has not been found an appropriate countermeasure concerning an appropriate condition in conditions where both corrosion and wear are involved.

The present invention has been made in view of the above problems. It is therefore an object of the present invention to provide a heat transfer tube, for a fluidized-bed boiler, having a protector which has sufficient durability in a corrosive wear environment, while reducing an initial cost by avoiding a complex structure, considering maintainability such as installation and replacement, and lowering a risk of crack or deformation.

In order to achieve the above object, the present inventors have conducted various studies on means for prolonging the lifetime of the protector, and the process of such studies will be described below.

As means for prolonging the lifetime of the protector while avoiding a complicated structure, thickening the protector is effective means, and casting is the best means for manufacturing the protector structure at a low cost. A test has been conducted by using a heat transfer tube to which a thick protector and a fixing jig are fixed by a fitting structure in order to avoid welding. However, a fluidized medium has entered gaps formed between a water tube, the protector, and the fixing jig, and then an excessive stress has been generated at the time of thermal contraction, thus leading to frequent troubles that the protector is cracked. Therefore, the fixing jig has been made as small as possible to reduce the stress generated, and the cracking has been prevented. Further, the weight has been reduced by making the jig small, and thus the on-site workability has been improved.

On the other hand, a problem of a thin protector is durability. In conventional technology, an increase in surface temperature has been proposed in the light of wear resistance, and a decrease in temperature has been proposed in the light of corrosion resistance.

With respect to this contradiction, the present inventors have used SUS310 and SCH13 as protectors in actual equipment for one year, and have found that even though SUS310 has more excellent corrosion resistance as a material, SUS310 has suffered severe thickness reduction. SUS310 comprising a thin plate has adhered tightly to the heat transfer tube, while SCH13 comprising casting has been inferior to SUS310 in the degree of adhesion and has been thick. Comparing the surface temperatures, SUS310 has been operated at a temperature lower than that of SCH13 by several hundred degrees. That is, the present inventors have found that an increase in temperature of a metal is effective in order to suppress the thickness reduction in the corrosive wear environment. Based on this knowledge, the present inventors have found that the surface temperature of the thin protector is increased by providing a heat-insulating layer between the thin protector and the water tube, and thus the thickness reduction can be suppressed. In order to prevent the thin protector from being damaged due to the stress, it is preferable to prevent the fluidized medium from entering between the thin protector and the water tube.

The present invention has been accomplished based on the above knowledge and through tests based on the above knowledge, and provides the following means for protecting the entire circumference of the heat transfer tube in the corrosive wear environment.

In accordance with the present invention, an apparatus and a method as set forth in the appended claims is provided. Further embodiments are inter alia disclosed in the dependent claims. In particular, according to the present invention, there is provided a heat transfer tube for use in a fluidized bed of a fluidized-bed boiler, the heat transfer tube comprising: a water tube through which a fluid flows; a thin protector, and a thick protector made of casting which are provided at an outer circumferential side of the water tube and are configured to protect the water tube; a heat-insulating layer provided between the water tube and the thin protector; and a fixing jig; wherein the fixing jig is fixed to the thick protector to cause the fixing jig to hold the thin protector provided at the outer circumferential side of the water tube. The thickness of the thick protector is in the range of 10 mm to 50 mm, and the thickness of the thin protector is in the range of 2 mm to 6 mm.

According to the invention, the fixing jig is fixed to the thick protector by a fitting structure.

According to the present invention, the fitting structure comprises a guide groove provided in one of the fixing jig and the thick protector, and a projecting portion provided on the other one of the fixing jig and the thick protector.

In a preferred embodiment of the present invention, the heat transfer tube for the fluidized-bed boiler further comprises a prevention structure configured to prevent a fluidized medium from entering the heat-insulating layer.

In a preferred embodiment of the present invention, the thin protector comprises a double structure in which the heat-insulating layer is interposed in the thin protector.

In a preferred embodiment of the present invention, the heat-insulating layer comprises a heat-insulating paper.

In a preferred embodiment of the present invention, the fixing jig is made of casting.

In a preferred embodiment of the present invention, an area of a portion of the thin protector which is covered with the fixing jig is not more than 50% of an area of an outer circumferential surface of the thin protector.

In a preferred embodiment of the present invention, a fin is provided on the thin protector.

According to the present invention, there is provided a fluidized-bed boiler configured to combust a fuel in a fluidized bed and to recover combustion heat by using a heat transfer tube, the fluidized-bed boiler comprising: a heat transfer tube according to any one of claims 1 to 7.

In a preferred embodiment of the present invention, the fluidized-bed boiler comprises an internally circulating fluidized-bed boiler which comprises a combustion chamber configured to combust the fuel therein, and a heat recovery chamber having an immersed heat transfer tube therein and configured to recover the combustion heat; and an amount of a fluidizing air in the heat recovery chamber is set so that uₒ/u_{mf} is in the range of 2.0 to 4.0 to circulate a fluidized medium between the combustion chamber and the heat recovery chamber.

According to the present invention, it is possible to provide a heat transfer tube, for a fluidized-bed boiler, having a long-life protector which facilitates installation and replacement work because welding work is minimized, and which can reduce cost because the protector is manufactured by casting that can produce a thick product at a low cost and can reduce damages caused by corrosive wear.

### BRIEF DESCRIPTION OF THE DRAWINGS

FIG. 1 is a schematic cross-sectional view showing a fluidized-bed boiler having heat transfer tubes according to an embodiment of the present invention;
FIG. 2 is a perspective view showing the heat transfer tube according to the present invention;
FIG. 3 is a cross-sectional view taken along line III-III of FIG. 2; and
FIG. 4 is an exploded perspective view showing steps for assembling the heat transfer tube shown in FIGS. 2 and 3.

### DESCRIPTION OF THE EMBODIMENTS

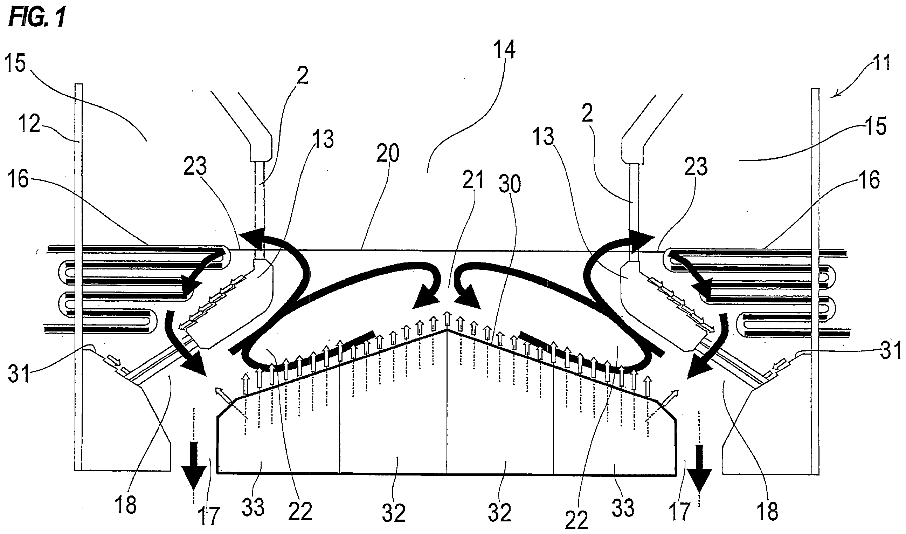

Heat transfer tubes for a fluidized-bed boiler according to embodiments of the present invention will be described below with reference to FIGS. 1 through 4. In FIGS. 1 through 4, identical or corresponding parts are denoted by identical reference numerals, and will not be described in duplication.

FIG. 1 is a schematic cross-sectional view showing a fluidized-bed boiler having heat transfer tubes according to an embodiment of the present invention. As shown in FIG. 1, the fluidized-bed boiler 11 comprises a furnace 12 having a substantially square tubular shape, and the interior of the furnace 12 is divided by a pair of right and left partition walls 13, 13 into one central combustion chamber 14 and two heat recovery chambers 15, 15 on both sides of the combustion chamber 14. A fluidized bed 20 for reacting thermally a fuel such as wastes or RDF is formed in the combustion chamber 14. The fluidized bed 20 is supported by a hearth plate 30. The hearth plate 30 installed in the furnace 12 has a chevron shape which is the highest at its center and is gradually lowered toward the opposite side edges. The hearth plate 30 has a number of gas diffusion nozzles for ejecting fluidizing air as a fluidizing gas into the furnace. Fluidized beds 23 are formed in the respective heat recovery chambers 15 and supported by hearth plates 31. Each of the hearth plates 31 has gas diffusion nozzles for ejecting fluidizing air as a fluidizing gas into the furnace.

As shown in FIG. 1, four air chambers 32, 32, 33, 33 are formed below the chevron-shaped hearth plate 30. These air chambers 32, 32, 33, 33 are supplied with fluidizing air from outside of the furnace. By adjusting the opening degrees of regulating valves (not shown) to control the flow rates of air supplied to the air chambers 32, 32, 33, 33, the fluidizing air is ejected from the air diffusion nozzles above the two central air chambers 32, 32 so as to give a substantially small fluidizing velocity and from the air diffusion nozzles above the two air chambers 33, 33 on both sides so as to give a substantially large fluidizing velocity. As a result, a moving bed 21 in which a fluidized medium moves downwardly at a relatively low speed is formed above the central region of the hearth plate 30, and fluidized beds 22 in which the fluidized medium moves upwardly are formed above both side regions of the hearth plate 30. Therefore, the fluidized medium moves from the moving bed 21 to the fluidized beds 22 in a lower portion of the fluidized bed 20, and moves from the fluidized beds 22 to the moving bed 21 in an upper portion of the fluidized bed 20, thus forming right and left circulating flows of the fluidized medium circulating between the moving bed 21 and the fluidized beds 22. The partition walls 13 have respective slanted portions which function as deflectors for allowing the ascending fluidized medium to turn into the inner side of the furnace 12.

In the internally circulating fluidized-bed boiler 11 configured as shown in FIG. 1, the fuel is supplied from a supply port (not shown) to the moving bed 21. At this time, the opening degrees of the regulating valves are adjusted to control an amount of the fluidizing air such that an amount of the fluidizing air supplied to the moving bed 21 is smaller than an amount of the fluidizing air supplied to the fluidized beds 22. According to the present embodiment, the amount of the fluidizing air supplied to the moving bed 21 is set so that uₒ/u_{mf} is in the range of 2 to 3 and the amount of the fluidizing air supplied to the fluidized beds 22 is set so that uₒ/u_{mf} is in the range of 4 to 6. Here, uₒ represents a superficial velocity and u_{mf} represents a minimum fluidizing superficial velocity.

The fuel that has been supplied to the moving bed 21 sinks into the fluidized medium and moves downwardly together with the fluidized medium. At this time, the fuel is thermally decomposed by the heat of the fluidized medium to generate a combustible gas from a combustible component in the fuel, thus producing a brittle pyrolysis residue. The pyrolysis residue typically includes incombustibles and unburned combustibles (char) which have become brittle by pyrolysis. The pyrolysis residue produced in the moving bed 21 moves downwardly and reaches the hearth plate 30 together with the fluidized medium, and then moves along the inclined hearth plate 30 toward the fluidized beds 22. The pyrolysis residue which has reached the fluidized beds 22 is brought into contact with the fluidized medium that is vigorously fluidized, and thus the unburned combustibles are separated from the incombustibles. The incombustibles from which the unburned combustibles have been separated are discharged together with part of the fluidized medium from incombustible discharge ports 17.

On the other hand, the unburned combustibles which have been separated from the incombustibles move upwardly together with the fluidized medium that is fluidized by supply of the fluidizing air. At this time, the unburned combustibles are combusted by the supplied fluidizing air to produce a combustion gas while heating the fluidized medium, and are turned into particles of unburned combustibles and ash that are fine enough to be carried by the gas. The high-temperature fluidized medium that has reached the upper portions of the fluidized beds 22 partly flows into the moving bed 21. In the fluidized beds 22, the fluidized medium is heated to a temperature which is high enough to appropriately pyrolyze the fuel when the fluidized medium flows into the moving bed 21. The fluidized medium that has flowed into the moving bed 21 receives the supplied fuel again, and repeats the above thermal reactions in the moving bed 21 and the fluidized beds 22. The moving bed 21 is kept at a temperature ranging from 700 to 900 °C, and the fluidized beds 22 are kept at a temperature ranging from 700 to 900°C.

Further, the high-temperature fluidized medium in the upper portions of the fluidized beds 22 partly flows over the upper ends of the partition walls 13 into the heat recovery chambers 15. Between the combustion chamber 14 and the heat recovery chambers 15, a number of screen water tubes 2 are provided in a substantially vertical direction so as to surround the respective heat recovery chambers 15. The fluidized medium enters the heat recovery chambers 15 through spaces between the screen water tubes 2. The fluidized medium that has entered the heat recovery chambers 15 form fluidized beds 23 in which the fluidized medium moves downwardly. The hearth plates 31 in the heat recovery chambers 15 are slanted downwardly from the inner wall side of the furnace 12 toward the combustion chamber side. Openings 18 are provided at lower portions of the heat recovery chambers 15. The fluidized medium that has entered the heat recovery chambers 15 descends while forming the fluidized beds 23, and circulates through the openings 18 into the combustion chamber 14. The temperature of the fluidized medium that flows into the heat recovery chambers 15 is in the range of 700 to 900°C. Immersed heat transfer tubes 16 are disposed in the fluidized beds 23 in the heat recovery chambers 15. The high-temperature fluidized medium is brought into contact with the immersed heat transfer tubes 16 while moving downwardly, and thus a fluid (boiler water) in the immersed heat transfer tubes 16 recovers heat from the fluidized medium by heat exchange with the fluidized medium. The amount of heat recovered by the immersed heat transfer tubes 16 can be controlled by adjusting an amount of the fluidizing air to be ejected from the gas diffusion nozzles on the hearth plates 31 of the fluidized beds 23 so that uₒ/u_{mf} is in the range of 2 to 4. The fluidized medium that has circulated into the combustion chamber 14 is supplied to the fluidized beds 22, and ascends together with the fluidized medium of the fluidized beds 22. The fluidized medium partly enters the heat recovery chambers 15 again, and repeats heat exchange with the fluid in the immersed heat transfer tubes 16.

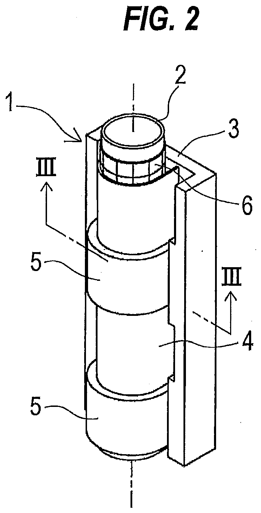

An embodiment in which the heat transfer tube according to the present invention is applied to the screen water tubes 2 of the fluidized-bed boiler 11 shown in FIG. 1 will be described below with reference to FIGS. 2 to 4.

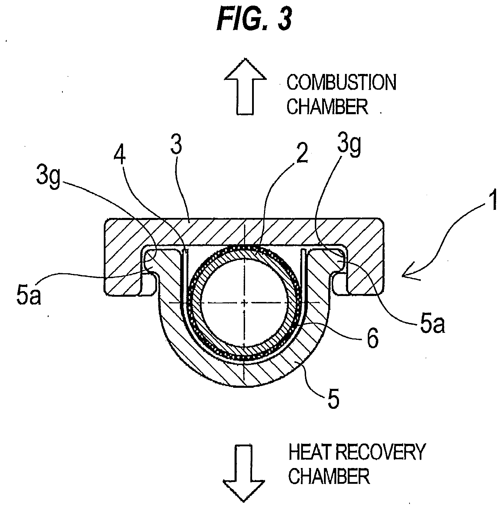

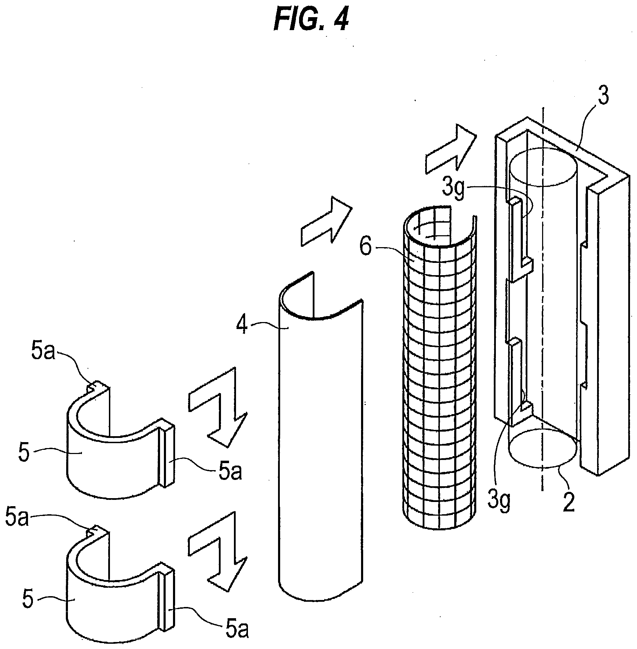

FIG. 2 is a perspective view showing the heat transfer tube according to the present invention, and FIG. 3 is a cross-sectional view taken along line III-III of FIG. 2. FIG. 4 is an exploded perspective view showing steps for assembling the heat transfer tube shown in FIGS. 2 and 3.

As shown in FIGS. 2 and 3, the heat transfer tube 1 comprises a cylindrical water tube (screen water tube) 2 in which a fluid (boiler water) flows, a thick protector 3 having a cross section of an angular U-shape and arranged so as to surround a part of the circular circumferential surface of the water tube 2, a thin protector 4 having a cross section of a U-shape and arranged so as to surround a part of the circular circumferential surface of the water tube 2 at the opposite side of the thick protector 3, and fixing jigs 5 having a cross section of a U-shape and fixed to the thick protector 3 by fitting in a state where the fixing jigs 5 hold the outer circumferential surface of the thin protector 4 from the outside of the thin protector 4. That is, the entire circumferential surface of the water tube 2 is surrounded and protected by the thick protector 3 and the thin protector 4. The thickness of the thick protector 3 is in the range of 10 mm to 50 mm, and the thickness of the thin protector 4 is in the range of 2 mm to 6 mm.

The screen water tubes 2 for partitioning the combustion chamber 14 and the heat recovery chambers 15 are exposed to a corrosive environment and an abrasion condition on the combustion chamber side severer than those on the heat recovery chamber side. The surface of the screen water tube 2 on the severer combustion chamber side is protected entirely by the thick protector 3 made of casting. On the other hand, the surface of the screen water tube 2 on the relatively mild heat recovery chamber side is protected by the thin protector 4. The fixing jigs 5 have a minimum necessary size for holding the thin protector 4. With this configuration, stresses generated at the fitting portions of the thick protector 3 and the fixing jigs 5 are suppressed to prevent the thick protector 3 from being cracked. Also, the total weight is reduced to improve the maintainability. Further, in the light of improvement of work efficiency, one fixing jig 5 is made smaller to reduce its weight, and the fixing jig 5 is designed in two-stage structure as a whole.

In the present invention, the thick protector 3 and the fixing jigs 5 are made of stainless casting, such as SCS13, SCS14, SCS18, SCH13, SCH21, and SCH22, or heat-resistant cast steel. The thin protector 4 is made of stainless steel, such as SUS304, SUS310, and SUS316, or steel such as SS400. In the present embodiment, in consideration of manufacturing cost and ease of installation, the thick protector 3 is made of casting and the thin protector 4 is made of a plate material of SUS310 stainless steel.

The present inventors have found that a direct contact between the thin protector 4 exposed to the atmosphere in the fluidized bed and the screen water tube 2 causes a lowering in the metal surface temperature to thus accelerate the thickness reduction caused by corrosive wear at portions exposed to the atmosphere. Thus, a heat-insulating layer is provided between the thin protector 4 and the screen water tube 2 to prevent excessive cooling. The heat-insulating layer provided between the thin protector 4 and the water tube 2 is made of a heat-insulating material, a heat-insulating castable, and the like, and the heat-insulating layer is configured to prevent the fluidized medium from entering the heat-insulating layer. In this case, the heat-insulating material can be any form, and may be in the form of paper, fiber, powder, or bulk. In the present embodiment, the heat-insulating layer comprises a heat-insulating paper 6. In the case where the heat-insulating layer comprises an air layer, in order to prevent the fluidized medium from entering the heat-insulating layer, a shade made of casting, steel, or the like, may be provided above the thick protector 3 and the thin protector 4. The thickness of the heat-insulating layer is preferably 0.25 mm or more. The thin protector 4 may be formed in a double-layer structure, in which a heat-insulating layer is provided between two thin protectors. In order to increase the surface temperature of the thin protector 4, the thin protector may be provided with fins.

According to the present invention, the thick protector 3 and the fixing jigs 5 are fixed by a fitting structure, thus allowing easy and simple attachment without the necessity of welding. Guide grooves are formed in one of the thick protector 3 and the fixing jigs 5, and projecting portions of the fixing jigs 5 or projecting portions of the thick protector 3 are fitted into the guide grooves. However, since a thermal stress is generated at the locations where the guide grooves are formed, in terms of prevention of crack, it is preferable to form the guide grooves in the thick protector which has a larger area. In the present embodiment, the thick protector 3 having the angular U-shaped cross section has guide grooves 3g, 3g in inner surfaces of both side portions of the thick protector 3. Each of the fixing jigs 5 having the U-shaped cross section has projecting portions 5a, 5a on both side portions at an opening side thereof. The projecting portions 5a, 5a of the fixing jigs 5 are fitted into the guide grooves 3g, 3g of the thick protector 3, so that the fixing jigs 5 are fixed to the thick protector 3. Through holes may be formed in the fixing jigs 5 and the thick protector 3 to fix the fixing jigs 5 and the thick protector 3 by bolts and nuts.

If the fixing jigs 5 are large, the total weight including the protectors 3,4 becomes heavy to cause difficult handling, and the thermal stress generated at the guide groove portions becomes large. Thus, the fixing jigs 5 are preferably small, and the area of portions of the thin protector 4 which are covered with the fixing jigs 5 should be 50% or less, preferably 30% or less of the area of the outer circumferential surface of the thin protector 4. On the other hand, the area of portions of the thin protector 4 which are covered with the fixing jigs 5 should be 20% or more of the area of the outer circumferential surface of the thin protector 4. The fixing jig 5 may be single-stage or multiple-stage structure. At the time of maintenance, only necessary parts such as the thin protector or the heat-insulating layer can be replaced.

Next, steps for attaching the protectors to the screen water tube 2 will be described with reference to FIG. 4. As shown in FIG. 4, at first, the heat-insulating paper 6 is wrapped around the screen water tube 2, and then the thick protector 3 and the thin protector 4 are combined. Finally, the projecting portions 5a of the fixing jigs 5 are fitted into the guide grooves 3g provided in the thick protector 3 to thereby attach the fixing jigs 5 to the thick protector 3.

The configuration according to the present invention shown in FIGS. 2 through 4, the case (comparative example 1) where a fixing jig having the same size as the thick protector was used instead of the thin protector, and the case (comparative example 2) where the heat-insulating layer was not provided between the thin protector and the water tube were juxtaposed and evaluated in the actual equipment. The summary of the demonstration results is shown in Table 1.

As shown in Table 1, in terms of cracking, the product according to the present invention and the comparative example 2 had no problem, but cracks were found in the comparative example 1. In terms of the thickness reduction, in all cases, only a little thickness reduction rate was observed in the thick protector and the fixing jigs, and thus sufficient lifetimes could be expected. Meanwhile, in respect of the thin protector, in the comparative example 2 which did not have the heat-insulating layer, severe thickness reduction was observed at portions exposed to an environment and having no fixing jigs. Further, in the product according the present invention, the protector had a sufficient remaining thickness, and thus it was confirmed that the protector had a sufficient lifetime. Concerning the maintainability, the comparative example 2 was proved to be the easiest to maintain, and the product according to the present invention required an additional man-hour, compared to the comparative example 2, corresponding to the work for attaching the heat-insulating paper, but still did not require much labor hour. On the other hand, the comparative example 1 had poor workability because the heavy thick protector and the fixing jig were combined, and further the comparative example 1 required a lot of labor hour for detaching the thick protector and the fixing jig due to the fluidized medium which had been trapped during operation.

As described above, as a result of comprehensive judgment, it has been proved that the product according to the present invention is excellent in durability and maintainability. [Table 1]

**Table 1 Demonstration results of the present invention and the comparative examples**

| | Crack | Thickness reduction rate | Maintainability |
|---|---|---|---|
| Present invention | ○; not generate | ○; a little | ○; additional work to attach heat-insulating paper is required |
| Comparative example 1 | ×: generates cracks | ⊚; very little | ×; difficult to attach/detach |
| Comparative example 2 | ○; not generate | ×; severe thickness reduction in thin protector | ⊚; easiest |

Although the embodiment of present invention has been described above, the present invention is not limited to the above embodiment, but may be reduced to practice in various different manners within the scope of the technical concept thereof.

## Claims

1. A heat transfer tube (1) for use in a fluidized bed (20) of a fluidized-bed boiler (11), the heat transfer tube comprising:
a water tube (2) through which a fluid flows;
a thin protector (4), and a thick protector (3) made of casting which are provided at an outer circumferential side of the water tube (2) and are configured to protect the water tube (2); **characterized by**
a heat-insulating layer (6) provided between the water tube (2) and the thin protector (4); and
an additional fixing jig (5); wherein
the fixing jig (5) is fixed to the thick protector (3) to cause the fixing jig (5) to hold the thin protector (4) provided at the outer circumferential side of the water tube (2);
the fixing jig (5) is fixed to the thick protector (3) by a fitting structure; and
the fitting structure comprises a guide groove (3g) provided in one of the fixing jig (5) and the thick protector (3), and a projecting portion (5a) provided on the other one of the fixing jig (5) and the thick protector (3).

2. The heat transfer tube for the fluidized-bed boiler according to claim 1, further comprising a prevention structure configured to prevent a fluidized medium from entering the heat-insulating layer (6).

3. The heat transfer tube for the fluidized-bed boiler according to claim 1 or 2, wherein the thin protector (4) comprises a double structure in which the heat-insulating layer is interposed in the thin protector.

4. The heat transfer tube for the fluidized-bed boiler according to any one of claims 1 to 3, wherein the heat-insulating layer (6) comprises a heat-insulating paper.

5. The heat transfer tube for the fluidized-bed boiler according to any one of claims 1 to 4, wherein the fixing jig (5) is made of casting.

6. The heat transfer tube for the fluidized-bed boiler according to any one of claims 1 to 5, wherein an area of a portion of the thin protector (4) which is covered with the fixing jig (5) is not more than 50% of an area of an outer circumferential surface of the thin protector (4).

7. The heat transfer tube for the fluidized-bed boiler according to any one of claims 1 to 6, wherein a fin is provided on the thin protector (4).

8. A fluidized-bed boiler (11) configured to combust a fuel in a fluidized bed (20) and to recover combustion heat by using a heat transfer tube, the fluidized-bed boiler comprising:
a heat transfer tube (1) according to any one of claims 1 to 7.

9. The fluidized-bed boiler according to claim 8, wherein the fluidized-bed boiler (11) comprises an internally circulating fluidized-bed boiler which comprises a combustion chamber (14) configured to combust the fuel therein, and a heat recovery chamber (15) having an immersed heat transfer tube (1) therein and configured to recover the combustion heat; and
an amount of a fluidizing air in the heat recovery chamber (15) is set so that uₒ/u_{mf} is in the range of 2.0 to 4.0 to circulate a fluidized medium between the combustion chamber (14) and the heat recovery chamber (15).

## Patentansprüche

1. Wärmeübertragungsrohr (1) zur Verwendung in einem fluidisierten Bett bzw. Wirbelbett (20) eines Wirbelbettboilers (11), wobei das Wärmeübertragungsrohr Folgendes aufweist:
ein Wasserrohr (2), durch welches ein Strömungsmittel fließt;
einen dünnen Protektor (4) und einen dicken Protektor (3), die aus einem Gussstück gemacht sind, die an einer Außenumfangsseite des Wasserrohrs (2) vorgesehen sind und konfiguriert sind, um das Wasserrohr (2) zu schützen, **dadurch gekennzeichnet, dass**
eine wärmeisolierende Schicht (6) zwischen dem Wasserrohr (2) und dem dünnen Protektor (4) vorgesehen ist; und
eine zusätzliche Haltevorrichtung (5) vorgesehen ist, wobei die Haltevorrichtung (5) an dem dicken Protektor (3) befestigt ist, um zu bewirken, dass die Haltevorrichtung (5) den dünnen Protektor (4) hält, der an der Außenumfangsseite des Wasserrohrs (2) vorgesehen ist;
wobei die Haltevorrichtung (5) an dem dicken Protektor (3) durch eine Passstruktur befestigt ist; und
wobei die Passstruktur eine Führungsnut (3g) aufweist, die in der Haltevorrichtung (5) oder dem dicken Protektor (3) vorgesehen ist, und wobei ein Schutzteil (5a) an dem anderen Element vorgesehen ist, d.h. an der Haltevorrichtung (5) oder dem dicken Protektor (3).

2. Wärmeübertragungsrohr für einen Wirbelschichtboiler nach Anspruch 1, welches weiter eine Verhinderungsstruktur aufweist, die konfiguriert ist, um zu verhindern, dass fluidisiertes Medium bzw. Wirbelmedium in die Wärmeisolationsschicht (6) eintritt.

3. Wärmeübertragungsrohr für den Wirbelschichtboiler nach Anspruch 1 oder 2, wobei der dünne Protektor (4) eine doppelte Struktur aufweist, bei der die wärmeisolierende Schicht (6) in dem dünnen Protektor eingelegt ist.

4. Wärmeübertragungsrohr für den Wirbelschichtboiler nach irgendeinem der Ansprüche 1 bis 3, wobei die wärmeisolierende Schicht (6) wärmeisolierendes Papier aufweist.

5. Wärmeübertragungsrohr für den Wirbelschichtboiler nach einem der Ansprüche 1 bis 4, wobei die Haltevorrichtung (5) aus einem Gussteil gemacht ist.

6. Wärmeübertragungsrohr für den Wirbelschichtboiler nach einem der Ansprüche 1 bis 5, wobei eine Fläche eines Teils des dünnen Protektors (4), die mit der Haltevorrichtung (5) bedeckt ist, nicht mehr als 50% einer Fläche einer Außenumfangsfläche des dünnen Protektors (4) ist.

7. Wärmeübertragungsrohr für den Wirbelschichtboiler nach einem der Ansprüche 1 bis 6, wobei eine Finne an dem dünnen Protektor (4) vorgesehen ist.

8. Wirbelschichtboiler (11), der konfiguriert ist, um einen Brennstoff in einem fluidisierten Bett bzw. Wirbelbett (20) zu verbrennen und Verbrennungswärme durch Verwendung eines Wärmeübertragungsrohrs wiederzugewinnen, wobei der Wirbelschichtboiler Folgendes aufweist:
ein Wärmeübertragungsrohr (1) nach einem der Ansprüche 1 bis 7.

9. Wirbelschichtboiler nach Anspruch 8, wobei der Wirbelschichtboiler (11) einen innen zirkulierenden Wirbelschichtboiler aufweist, der eine Brennkammer (14) aufweist, die konfiguriert ist, um den Brennstoff darin zu verbrennen, und eine Wärmewiedergewinnungskammer (15), die ein eingetauchtes Wärmeübertragungsrohr (1) darin hat und konfiguriert ist, um die Verbrennungswärme wiederzugewinnen; und
wobei eine Menge der Fluidisierungsluft bzw. Wirbelluft in der Wärmewiedergewinnungskammer (15) so eingestellt ist, dass uₒ/u_{mf} im Bereich von 2,0 bis 4,0 ist, um ein fluidisiertes Medium bzw. Wirbelmedium zwischen der Brennkammer (14) und der Wärmewiedergewinnungskammer (15) zu zirkulieren.

## Revendications

1. Tube de transfert de chaleur (1) pour utilisation dans un lit fluidisé (20) d'une chaudière à lit fluidisé (11), le tube de transfert de chaleur comprenant :
un tube d'eau (2) dans lequel circule un fluide ;
un protecteur mince (4) et un protecteur épais (3) obtenus par coulée qui sont prévus au niveau d'un côté circonférentiel extérieur du tube d'eau (2) et sont agencés pour protéger le tube d'eau (2) ; **caractérisé en ce que**
une couche d'isolation thermique (6) est prévue entre le tube d'eau (2) et le protecteur mince (4) ; et
un élément de fixation additionnel (5) ; dans lequel l'élément de fixation (5) est fixé au protecteur épais (3) pour faire en sorte que l'élément de fixation (5) maintienne le protecteur mince (4) prévu au niveau du côté circonférentiel extérieur du tube d'eau (2) ;
l'élément de fixation (5) est fixé au protecteur épais (3) par une structure de montage ; et
la structure de montage comprend une gorge de guidage (3g) prévue dans l'un de l'élément de fixation (5) et du protecteur épais (3), et une portion saillante (5a) prévue sur l'autre de l'élément de fixation (5) et du protecteur épais (3).

2. Tube de transfert de chaleur pour la chaudière à lit fluidisé selon la revendication 1, comprenant en outre une structure de prévention agencée pour empêcher qu'un milieu fluidisé entre dans la couche d'isolation thermique (6).

3. Tube de transfert de chaleur pour la chaudière à lit fluidisé selon la revendication 1 ou 2, dans lequel le protecteur mince (4) comprend une structure double dans laquelle la couche d'isolation thermique est intercalée dans le protecteur mince.

4. Tube de transfert de chaleur pour la chaudière à lit fluidisé selon l'une quelconque des revendications 1 à 3, dans lequel la couche d'isolation thermique (6) comprend un papier isolant thermique.

5. Tube de transfert de chaleur pour la chaudière à lit fluidisé selon l'une quelconque des revendications 1 à 4, dans lequel l'élément de fixation (5) est obtenu par coulée.

6. Tube de transfert de chaleur pour la chaudière à lit fluidisé selon l'une quelconque des revendications 1 à 5, dans lequel une région d'une portion du protecteur mince (4) qui est couverte par l'élément de fixation (5) a une surface qui n'est pas supérieure de plus de 50 % à celle d'une surface circonférentielle extérieure du protecteur mince (4).

7. Tube de transfert de chaleur pour la chaudière à lit fluidisé selon l'une quelconque des revendications 1 à 6, dans lequel une ailette est prévue sur le protecteur mince (4).

8. Chaudière à lit fluidisé (11) agencée pour brûler un carburant dans un lit fluidisé (20) et pour récupérer de la chaleur de combustion en utilisant un tube de transfert de chaleur, la chaudière à lit fluidisé comprenant :
un tube de transfert de chaleur (1) selon l'une quelconque des revendications 1 à 7.

9. Chaudière à lit fluidisé selon la revendication 8, dans laquelle la chaudière à lit fluidisé (11) comprend une chaudière à lit fluidisé à circulation interne qui comprend une chambre de combustion (14) agencée pour brûler le carburant dedans, et une chambre de récupération de chaleur (15) comportant un tube de transfert de chaleur immergé (1) et agencée pour récupérer la chaleur de combustion ; et
une quantité d'air fluidisé dans la chambre de récupération de chaleur (15) est réglée de telle sorte que uₒ/u_{mf} soit compris entre 2,0 et 4,0 pour faire circuler un milieu fluidisé entre la chambre de combustion (14) et la chambre de récupération de chaleur (15).
